## Europäisches Patentamt
## European Patent Office
## Office européen des brevets

(19)

(11) Publication number: **0 133 610**
**B1**

(12)

# EUROPEAN PATENT SPECIFICATION

(45) Date of publication of patent specification: **18.10.89**

(51) Int. Cl.⁴: **B 60 C 23/00**

(21) Application number: **84850232.4**

(22) Date of filing: **25.07.84**

(54) **Dual tire pressure equalizer and indicator.**

(30) Priority: **01.08.83 US 519031**

(43) Date of publication of application:
**27.02.85 Bulletin 85/09**

(45) Publication of the grant of the patent:
**18.10.89 Bulletin 89/42**

(84) Designated Contracting States:
**DE FR GB IT SE**

(56) References cited:
**WO-A-81/02869**
**FR-A-2 362 736**
**GB-A- 636 470**

(73) Proprietor: **SCOVILL INC**
**500 Chase Parkway**
**Waterbury Connecticut 06708 (US)**

(72) Inventor: **Todhunter, Gordon Robert**
**46 Howard Avenue**
**Brandord Connecticut 06405 (US)**
Inventor: **Grim, James William**
**843 Long Hunter Court**
**Nashville Tennessee 37214 (US)**

(74) Representative: **Wennborg, Göte et al**
**KRANSELL & WENNBORG AB Sandhamnsgatan 42**
**S-115 28 Stockholm (SE)**

Courier Press, Leamington Spa, England.

## Description

This invention relates to a dual tire pressure equilizer and rotary pressure indicator adapted to show the pressure range within a dual tire system and to indicate when the pressure is lower than a preset limit.

A prior art dual tire pressure equalizer and indicator is disclosed in United States Patent 2,427,445 to Davidson. In this device a piston-operated valve, exposed on one side to the pressure in the dual tire system and on the other side to spring means, closes off the connection between the two tires when the pressure in the system drops to prevent both tires from going flat. The piston also has a linear extension which indicates the status of the pressure in the system through a transparent dome.

Another device is shown in United States Patent 1,882,455 to Spicer, wherein the pressure sensing means in the dual tire equalizer is also a piston. It is covered by a rubber layer which, upon a pressure drop, engages a seat to close off the connection between the two tires.

French Patent Application 2 362 736 to Robert Bosch describes a device of the kind disclosed in the preamble of Claim 1.

The present invention is of this kind and exhibits the features given in the characterizing portion of Claim 1. This device not only effectively equalizes tire pressure in dual tire systems, and closes off communication in the event of a flat, but effectively indicates the condition of the pressure. The structure is simple in operation and compact in arrangement.

Brief description of the drawings

Figure 1 is a side elevation of an equalizer and indicator embodying the invention, with various connecting tubes broken off;

Figure 2 is an enlarged sectional view;

Figure 3 is a perspective exploded view;

Figure 4 is a fragmentary sectional view taken on line 4—4 of Figure 5;

Figure 5 is a fragmentary sectional view taken on line 5—5 of Figure 4; and

Figure 6 is a fragmentary sectional view taken on line 6—6 of Figure 4.

Description of the preferred embodiment

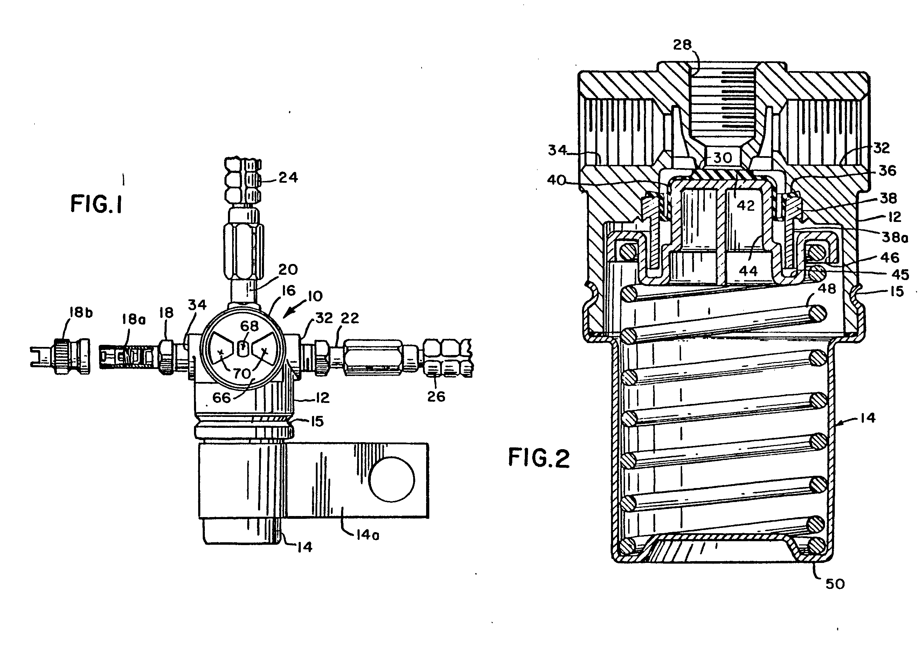

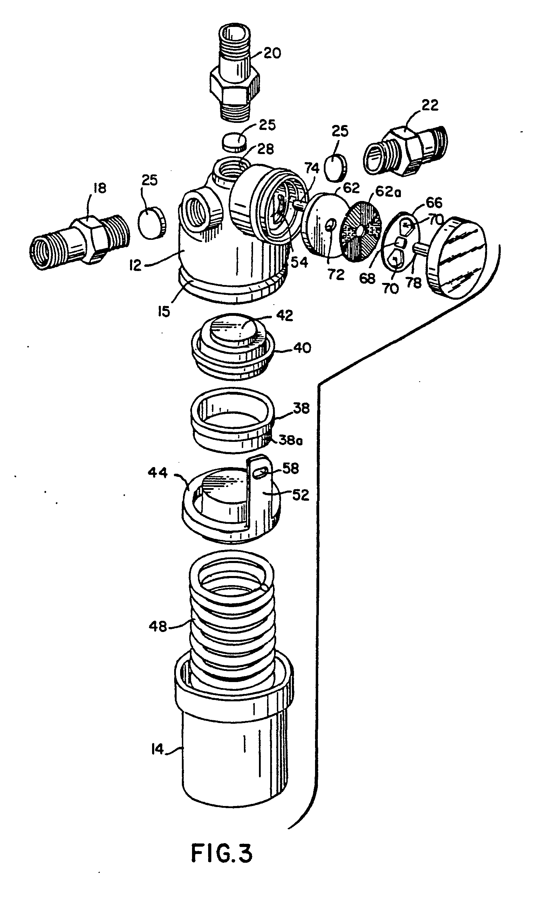

A dual tire pressure equalizer and indicator embodying the invention is generally designated 10 in Figure 1. It comprises an upper housing 12 which may be a die casting and a lower housing 14 which may be a drawn cup crimped onto the upper housing at 15. A bracket 14a secures the unit to a wheel. An indicator mount 16 is disposed on the upper housing, which has a fill connection 18 with a standard tire valve core 18a and cap 18b, a first tire connector 20 and a second tire connector 22. The connectors are attached to the respective tires by flexible tubes 24 and 26. Filter discs 25 (Figure 3) are disposed intermediate the fittings and the body 12.

The top of the upper housing 12 has a first tire · connector passage 28 (Figure 2) which terminates in an opening into the housing surrounded by a seat 30. A second tire connector passage 32 is provided into the upper chamber as well as a fill passage 34. An annular downward facing shelf 36 is disposed under passage 32 as shown in Figure 2. A ring 38 clamps the periphery of a rubber diaphragm 40 against the shelf. The diaphragm may be centrally thickened as at 42. The ring 38 has a downward guide skirt 38a for reasons that will appear below.

Supporting the central portion of the diaphragm is an inverted cup 44, the periphery of which is doubled back to present an annular upward facing recess 45 and then redoubled back to present a downward facing recess 46. The upward recess receives guide skirt 38a and downward recess 46 receives the upper end of a spring 48. The lower end of the spring bears against the bottom wall 50 of the cup 14.

By virtue of the structure described thus far, pressure in the upper portion of the housing will urge the diaphragm 40, cup 44 assembly downward against the upward force of the spring 48. A drop in pressure will permit the spring 48 to drive the cup and diaphragm upward to engage seat 30, thus closing off communication between the first tire connector passage 28 and second tire connector passage 32 as shown in Figure 2.

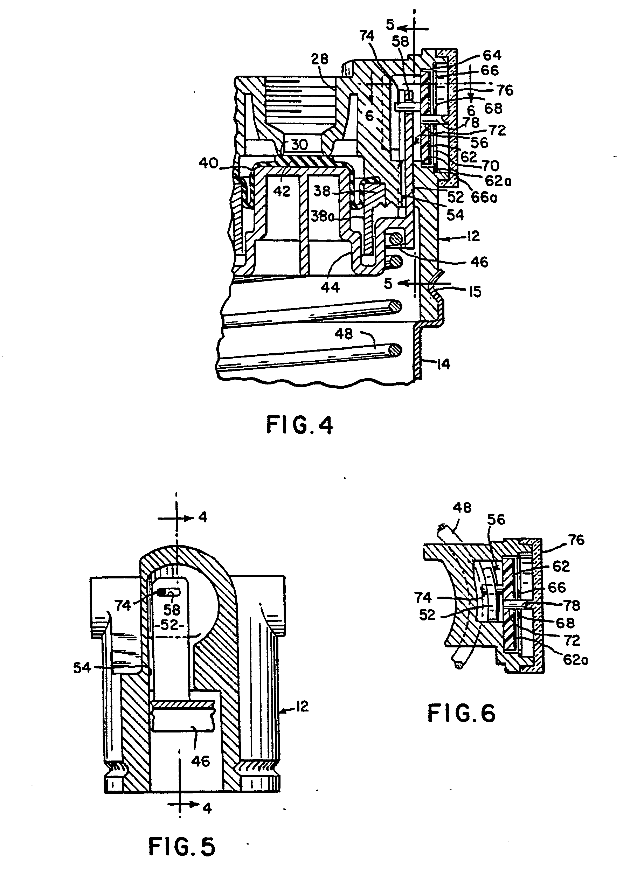

Extending upward from the periphery of the cup 44 is a curved arm 52 (Figure 4), which passes through a slot 54 in the housing which communicates from the lower chamber defined by cup 14 into an indicator recess 56. As shown, the upper end of the arm is slotted horizontally at 58 (Figure 5). The portion of the housing surrounding the recess 56 is formed with an annular ledge which journals a disc 62 covered by indicator disc 62a fixedly mounted thereon. A concentric wider ledge 64 is disposed adjacent the mouth of the recess, and houses a disc-shaped mask 66 which is formed with a central aperture 68 and segmental windows 70 (Figure 3). The indicator disc 62 is also formed with a central aperture 72. A pin 74 extends rearwardly from the disc, offset from the aperture 72, and is received in the slot 58.

A clear transparent cup 76 fits over the mouth of the housing and is formed with a central shank 78 receiving the apertures 68 and 72 on the discs 66 and 62, respectively.

In operation, the unit is installed on a wheel of the dual assembly, and the connecting tubes 24 and 26 are coupled to the tire valves of the wheels from which the cores are removed. The two tires are then filled through the air inlet connection 18. When the pressure builds up sufficiently in the upper housing, the diaphragm 40, 42 overpowers the spring 48 and unseats from seat 30 to open communication with the first tire through passage 28 and the second tire through passage 32. As the diaphragm 40 and cup 44 descend, arm 52 lowers causing the indicator disc 62a to rotate via the offset pin 74 and slot 58. During the initial filling, when the gauging pressure at connection 18 is at a level recommended by the tire manufacturer, the masking disc 66 is rotated to show green sectors of the disc 62a. The masking disc 66 is then staked as at 66a (Figure 4) to the housing in this position. If the tires are overinflated, the diaphragm and cup lower further causing yellow sectors of disc 62a to appear in the windows.

When the pressure drops, diaphragm 40 and cup 44 will raise, rotating the disc 62a to a position whereat red sectors show through windows 70 alerting the driver to add air. Should the air pressure drop further, as in a blowout situation, the diaphragm 40 and cup 44 will instantly raise to a position where the thickened portion 42 closes off seat 30, thus blocking the connection between the two tires. This avoids deflation of both tires in the event one tire has a flat. Subsequent addition of air will increase the pressure in the system backing the diaphragm away from seat 30 and filling both tires simultaneously.

It will be clear from the above description that we have developed a device which not only effectively equalizes tire pressure in dual tire systems, and closes off communication in the event of a flat, but effectively indicates the condition of the pressure. The structure is simple in operation and compact in arrangement.

## Claims

1. A dual tire pressure equalizer and pressure indicator for tires comprising:

(a) a housing (12) having a first chamber and a second chamber (14) separated by a sealed diaphragm (40, 42), the first chamber having:

(1) a seat (30) opposite the diaphragm, with a central opening, the diaphragm being adapted to seat and close off the seat,

(2) first passage means (28) for connecting the seat opening and one tire,

(3) second passage means (32) for connecting the upper chamber to the other tire, and

(4) fill means (34);

(b) an inverted cup (44) underlying the diaphragm and radially extending well out beyond the margin of the diaphragm;

(c) spring means (48) in the second chamber (14) engaging the cup (44) and urging the cup and diaphragm toward seating disposition; characterized in

(d) an arm (52) extending from the periphery of the cup longitudinally of the axis of the cup away from the spring means;

(e) rotary indicator means comprising a disc (62, 62a) mounted for rotation in a side of the housing;

(f) the arm being formed with a transverse slot (58) near its end and the disc having a pin (74) affixed perpendicular thereto at a point spaced from the rotational axis of the disc, the pin passing through the slot (58) whereby as pressure drops from a selected pressure, the diaphragm and cup driven by the spring, move toward the seat and the indicator indicates a less-than-selected pressure, and when the diaphragm seats, isolating the two tires, the indicator indicates low pressure.

2. A dual tire pressure equalizer and pressure indicator as claimed in claim 1 wherein the arm (52) is arcuate in horizontal cross-section.

3. A dual tire pressure equalizer and pressure indicator as claimed in claim 2 wherein the cup (44) has an annular recess (46) adjacent the periphery thereof, the recess receiving an end of the spring means (48).

## Patentansprüche

1. Doppelreifen-Druckausgleicher und Druckanzeiger für Reifen, umfassend:

(a) ein Gehäuse (12) mit einer ersten Kammer und einer zweiten Kammer (14), die durch eine abgedichtete Membran (40, 42) voneinander getrennt sind, wobei die erste Kammer aufweist:

(1) einen Sitz (30) gegenüber der Membran, mit einer zentralen Öffnung, wobei die Membran derart ausgebildet ist, daß sie auf dem Sitz sitzen und diesen abschließen kann,

(2) erste Durchgangseinrichtungen (28) zur Verbindung der Sitzöffnung mit einem Reifen,

(3) zweite Durchgangseinrichtungen (32) zur Verbindung der oberen Kammer mit dem anderen Reifen, und

(4) Fülleinrichtungen (34);

(b) eine umgedrehte Schale (44), die unter der Membran liegt und sich radial gut über den Randbereich der Membran hinauserstreckt;

(c) Federeinrichtungen (48) in der zweiten Kammer (14), welche mit der Schale (44) im Eingriff stehen und die Schale und die Membran in die Sitzlage hin vorspannen;
dadurch gekennzeichnet,

(d) daß sich ein Arm (52) von dem Umfang der Schale in Längsrichtung der Achse der Schale von der Federeinrichtung weg erstreckt;

(e) daß eine Dreh-Anzeigeeinrichtung vorgesehen ist, welche eine Scheibe (62, 62a) umfaßt, die drehbar in einer Seite des Gehäuses montiert ist;

(f) daß der Arm mit einem Querschlitz (58) nahe seines Endes geformt ist und die Scheibe einen Stift (74) besitzt, der senkrecht dazu an einem Punkt im Abstand von der Rotationsachse der Scheibe befestigt ist und der Stift durch den Schlitz (58) hindurchverläuft, wodurch dann, wenn der Druck von einem vorgewählten Druck abfällt, die von der Feder getriebene Membran und die Schale sich zum Sitz hin bewegen und der Indikator einen Druck anzeigt, der geringer ist als der vorgewählte Druck, und wobei dann, wenn die Membran aufsitzt, und dei beiden Reifen voneinander trennt, der Anzeiger einen niedrigen Druck anzeigt.

2. Doppelreifen-Druckausgleicher und Druckanzeiger für Reifen nach Anspruch 1, wobei der Arm (52) im horizontalen Querschnitt bogenförmig ist.

3. Doppelreifen-Druckausgleicher und Druckanzeiger für Reifen nach Anspruch 2, wobei die Schale (44) eine ringförmige Ausnehmung (46) in der Nähe ihres Umfangs besitzt, und wobei die Ausnehmung ein Ende der Federeinrichtung (48) aufnimmt.

**Revendications**

1. Equilibreur de pression pour pneus jumelés et indicateur de pression pour pneus, comprenant:

a) un boîtier (12) ayant une première chambre et une seconde chambre (14) séparées par un diaphragme étanche (40, 42), la première chambre ayant:

1) un siège (30) opposé au diaphragme, avec une ouverture centrale, le diaphragme étant adapté à s'appliquer et à obturer le siège,

2) un premier moyen de passage (28) pour connecter l'ouverture du siège et un pneu,

3) un second moyen de passage (32) pour connecter la chambre supérieure à l'autre pneu, et

4) des moyens de remplissage (34);

b) une coupelle inversée (44) sous-jacente au diaphragme et s'étendant radialement bien au-delà du bord du diaphragme;

c) des moyens de ressort (48) dans la seconde chambre (14) appliqués sur la coupelle (44) et sollicitant la coupelle et le diaphragme vers la disposition de siège; caractérisé par

d) un bras (52) s'étendant à partir de la périphérie de la coupelle longitudinalement par rapport à l'axe de la coupelle, en direction opposée des moyens de ressort;

e) des moyens d'indicateur rotatifs comprenant un disque (62, 62a) monté pour pouvoir tourner dans un côté du boîtier;

f) le bras étant formé avec une fente transversale (58) près de son extrémité et le disque ayant une cheville (74) fixée perpendiculairement au disque, en un point écarté de l'axe de rotation du disque, la cheville passant par la fente (58), l'où il résulte que quand la pression tombe à partir d'une valeur choisie, le diaphragme et la coupelle entraînés par le ressort, se déplacent vers le siège et l'indicateur indique une pression inférieure à la valeur choisie, et quand le diaphragme s'applique sur le siège, isolant les deux pneus, l'indicateur indique une basse pression.

2. Equilibreur de pression pour pneus jumelés et indicateur de pression selon la revendication 1, dans lequel le bras (52) est arqué en coupe horizontale.

3. Equilibreur de pression pour pneus jumelés et indicateur de pression selon la revendication 2, dans lequel la coupelle (44) a une cavité annulaire (46) adjacente à sa périphérie, la cavité recevant une extrémité du moyen de ressort (48).

FIG.2

FIG.I

1

FIG.3

FIG.4

FIG.5

FIG.6